# EUROPÄISCHE PATENTANMELDUNG

(11) **EP 0 902 220 A2**
(43) Veröffentlichungstag der Anmeldung: **17.03.1999**
(21) Anmeldenummer: 98109586.2
(22) Anmeldetag: 27.05.1998
(51) Int. Cl.: F16J 15/32

(54) **Dichtungsanordnung**

(30) Priorität: 09.09.1997 DE 19739472
(71) Anmelder: Firma Carl Freudenberg, 69469 Weinheim (DE)
(72) Erfinder: Braun, Otmar, 34621 Frielendorf (DE); Siegrist, Uwe, 34633 Ottrau (DE)

(57) **Zusammenfassung**

Dichtungsanordnung zum Abdichten von zwei relativ zueinander hin- und herbeweglichen Maschinenelementen (1, 2), umfassend eine Stangen- oder Kolbendichtung (3), die in einer in Richtung des ersten Maschinenelements (1) offenen Nut (4) des zweiten Maschinenelements (2) angeordnet ist und aus einem Dichtring (5) und einem Vorspannring (6) aus elastomerem Werkstoff besteht, wobei der Dichtring (5) einen im wesentlichen T-förmigen Querschnitt aufweist und mit der Dichtfläche (7) seines Radialstegs (8) die abzudichtende Fläche (9) des ersten Maschinenelements (1) dichtend berührt, wobei der Vorspannring (6) unter elastischer Vorspannung zwischen dem Nutgrund (10) der Nut (4) und dem Axialsteg (11) des Dichtrings (5) angeordnet ist. Der Übergang von den Stirnseiten (12, 13) des Radialstegs (8) zu der Dichtfläche (7) ist gerundet ausgebildet.

## Beschreibung

Die Erfindung betrifft eine Dichtungsanordnung zum Abdichten Von zwei relativ zueinander hin- und herbeweglichen Maschinenelementen, umfassend eine Stangen- oder Kolbendichtung, die in einer in Richtung des ersten Maschinenelements offenen Nut des zweiten Maschinenelements angeordnet ist und aus einem Dichtring und einem Vorspannring aus elastomerem Werkstoff besteht, wobei der Dichtring 5 einen im wesentlichen T-förmigen Querschnitt aufweist und mit der Dichtfläche seines Radialstegs die abzudichtende Fläche des ersten Maschinenelements dichtend berührt, wobei der Vorspannring unter elastischer Vorspannung zwischen dem Nutgrund der Nut und dem Axialsteg des Dichtrings angeordnet ist.

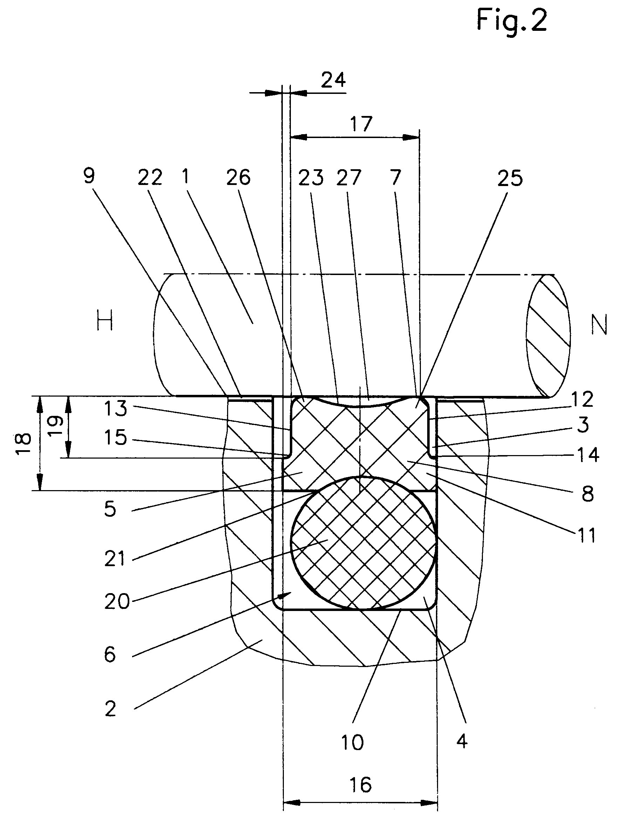

Eine solche Dichtungsanordnung ist aus der DE 41 40 833 C3, Figur 2 bekannt. Im drucklosen Zustand bildet die niederdruckseitige Nutflanke mit der unmittelbar dazu gegenüberliegenden Stirnseite des Axialstegs einen spitzen Winkel, der zu der abzudichtenden Fläche hin geöffnet ist. Unter Druckbeaufschlagung und/ oder durch die Reibkraft zwischen dem Dichtring und der abzudichtenden Fläche, ist der Dichtring zur Niederdruckseite hin derart verschwenkbar, daß dieser gegenüber der abzudichtenden Fläche eine Dichtkante ausbildet, wobei der Dichtring mit der abzudichtenden Fläche einen sich zu der Niederdruckseite hin öffnenden Keilspalt begrenzt. Die Übergangsbereiche von den Stirnseiten des Radialstegs zu der Dichtfläche und zum Axialsteg sind jeweils scharfkantig ausgebildet, wobei der scharfkantige Übergangsbereich von den Stirnseiten zu der Dichtfläche durch die relative Hin- und Herbeweglichkeit der abzudichtenden Fläche gegenüber dem Dichtring zu einem vergleichsweise hohen abrasiven Verschleiß führt und die Dichtkante während des Gebrauchs beschädigt werden kann. Im Übergangsbereich von den Stirnseiten des Radialstegs zum Axialsteg herrschen während des Gebrauchs der Dichtungsanordnung hohe Kerbspannungen, die zu einem Einreißen des Dichtrings in diesem Bereich führen können.

Der Erfindung liegt die Aufgabe zugrunde, eine Dichtungsanordnung der vorbekannten Art derart weiterzuentwickeln, daß die Haltbarkeit des Dichtrings, insbesondere im Übergangsbereich von den Stirnseiten des Radialstegs zu der Dichtfläche, verbessert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß der Übergang von den Stirnseiten des Radialstegs zu der Dichtfläche gerundet ausgebildet ist. Hierbei ist von Vorteil, daß eine Relativbewegung des ersten Maschinenelements bezogen auf den Dichtring nicht zu einer Beschädigung/ Zerstörung der Dichtfläche führt und daR die Dichtfläche die abzudichtende Fläche stets flächig anliegend berührt. Eine Verlagerung von Bestandteilen der Dichtfläche, insbesondere der beiden Dichtkanten während der Hin-und Herbewegung des ersten Maschinenelements unter die Dichtfläche, ist daher ausgeschlossen. Die erfindungsgemäße Dichtungsanordnung weist gute Gebrauchseigenschaften während einer langen Gebrauchsdauer auf. Außerdem ist von Vorteil, daß die Dichtfläche trotz einer erheblichen Breite des Radialstegs radial innen, im Anschluß an die Rundung, eine vergleichsweise geringe Ausdehnung in axialer Richtung aufweist und dadurch die Losbrechkraft bei Richtungsumkehr der Relativbewegung zwischen dem ersten Maschinenelement und dem Dichtring nur gering ist. Desweiteren ist von Vorteil, daß die Montage des ersten Maschinenelements mit dem Dichtring einfach und problemlos durchführbar ist, auch dann, wenn die abzudichtende Fläche des ersten Maschinenelements mit größeren Durchmessertoleranzen behaftet ist. Montagefehler, die zu einer Beschädigung und/ oder Zerstörung des Dichtrings führen könnten, sind auf eine Minimum beschränkt.

Die vorteilhaften Gebrauchseigenschaften der Dichtungsanordnung stellen sich ein, wenn der Radius zwischen den Stirnseiten und der Dichtfläche zumindest 0,2 mm beträgt. Im Idealfall beträgt der Radius 10 % der Gesamtbreite. Ein solcher Radius ist erheblich größer als der scharfkantige Übergang bei der Dichtungsanordnung aus dem genannten Stand der Technik, wobei ein solcher, scharfkantiger Übergang im allgemeinen einen Radius von höchstens 0,1 mm aufweist.

Bevorzugt ist der Übergang von den Stirnseiten des Radialstegs zum Axialsteg hohlkehlenförmig ausgebildet, wobei der Radius der Hohlkehlen bevorzugt zumindest 0,1 mm beträgt. Als vorteilhaft hat es sich bewährt, wenn das Verhältnis aus dem Radius des Übergangsbereichs von den Stirnseiten des Radialstegs zu der Dichtfläche zum Radius der Hohlkehlen zumindest 1,5 beträgt. Ein vergleichsweise geringerer Radius der Hohlkehlen ist ausreichend, um eine unzulässig hohe Kerbwirkung während der bestimmungsgemäßen Verwendung des Dichtrings in diesem Bereich zu vermeiden.

Das Verhältnis aus der Gesamtbreite des Dichtrings und der Breite der Dichtfläche in gleicher Richtung beträgt bevorzugt 1,1 bis 1,6.

Die Dichtfläche kann auch zur Mitte hin vertieft ausgeführt sein, um die Dichwirkung zu verbessern. Der durch die Vertiefung geschaffene Hohlraum kann als Schmiermitteltasche mit einem zusätzlichen Schmierstoff gefüllt sein, beispielsweise einem Sperrfett, um die Losbrechkraft und die Reibung auf ein Minimum zu begrenzen.

Die Vertiefung ist abhängig von der Gesamthöhe des Dichtrings, wobei die Abmessung der Vertiefung in radialer Richtung bevorzugt zwischen 4 und 10 % der Gesamthöhe des Dichtrings beträgt.

Der Übergang des Radius vom Radialsteg zur Vertiefung ist bevorzugt gerundet ausgeführt, wodurch zwei Dichtwulste geschaffen werden, die eine Steigerung der Dichwirkung bewirken.

Das Verhältnis aus der Gesamthöhe des Dichtrings und der Höhe des Radialstegs beträgt bevorzugt 1,25 bis 1,75. Durch eine derartige Ausgestaltung ist sichergestellt, daß der Radialsteg ausreichend groß dimensioniert ist und dadurch auch die entstehende Ringfläche des Dichtrings ausreichend groß ist, um bei Druckbeaufschlagung den Dichtring in Richtung Niederdruckseite zu verschieben. Außerdem ist von Vorteil, daß der Druck auf den O-Ring wirkt und der Dichtring durch den O-Ring zusätzlich angepreßt, daß heißt aktiviert wird. Ein Überströmen des Mediums auf die druckabgewandte Seite, sogenannte blow by-Effekte, werden dadurch verhindert.

Der Vorspannring ist bevorzugt als O-Ring ausgebildet. O-Ringe sind in sehr vielen Größen preisgünstig verfügbar, so daß die Stangen- oder Kolbendichtung in fertigungstechnischer und wirtschaftlicher Hinsicht einfach und kostengünstig herstellbar ist.

Das Profil der dem Vorspannring zugewandten Stützfläche des Axialstegs hat einen Wölbungsradius, der größer ist, als der Wölbungsradius des O-Rings. Das Verhältnis aus dem Radius des Profils der Stützfläche und dem Radius des Profils des O-Rings beträgt bevorzugt 1,5 bis 2,5. Durch eine derartige Ausgestaltung läßt sich die dem O-Ring eigene Federelastizität in besonders guter Weise ausnutzen, was es gestattet die zur Anwendung gelangende, elastische Vorspannung zu reduzieren und mit einer vergleichsweisen geringen, elastischen Deformation des O-Rings ein gutes Abdichtungsergebnis zu erzielen. Auftretenden Relaxationserscheinungen wird durch eine derartige Ausgestaltung entgegengewirkt, so daß eine wesentlich verbesserte Gebrauchsdauer erzielt wird, als bei Stangen- oder Kolbendichtungen, bei denen der O-Ring auf einer in axialer Richtung ebenen Stützfläche abgestützt ist. Durch das konkav eingewölbte Profil ist die Relativbeweglichkeit des O-Rings verbessert. Außerdem werden Atmungsbewegungen des O-Rings zwischen zwei aufeinanderfolgenden Arbeitstakten ermöglicht.

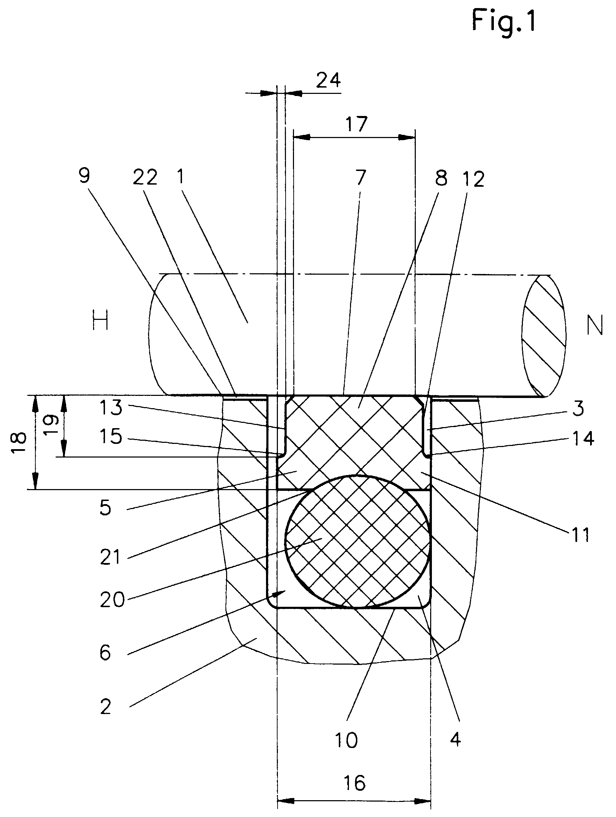

Die erfindungsgemäße Dichtungsanordnung wird nachfolgend anhand der Figuren 1 und 2 näher erläutert. Diese zeigen jeweils ein Ausführungsbeispiel in geschnittener und schematischer Darstellung.

In Figur 1 ist eine Dichtungsanordnung gezeigt, die eine Stangendichtung umfaßt. Das erste Maschinenelement 1 ist durch eine hin- und herbewegliche Stange gebildet, die von einem Gehäuse mit radialem Abstand umschlossen ist, das das zweite Maschinenelement 2 bildet. Im zweiten Maschinenelement 2 ist eine in Richtung des ersten Maschinenelements 1 offene Nut 4 angeordnet, in der die Stangendichtung aufgenommen ist. Die axiale Breite der Nut 4 ist größer als die axiale Ausdehnung der Stangendichtung, so daß die Stangendichtung abhängig von der Richtung der Druckbeaufschlagung an die Begrenzungwandung der Nut 4 anlegbar ist, die der Niederdruckseite zugewandt ist. Die Stangendichtung ist unter radialer Vorspannung innerhalb der Nut 4 angeordnet; die Dichtfläche 7 des Dichtrings 5 umschließt die abzudichtende Fläche 9 des ersten Maschinenelements 1 dichtend unter radialer Vorspannung.

Der Vorspannring 6 ist in diesem Ausführungsbeispiel als O-Ring ausgebildet und besteht aus einem elastomeren Werkstoff. Im hier gezeigten Ausführungsbeispiel ist die Niederdruckseite mit N, die Hochdruckseite mit H gekennzeichnet. Die Abdichtung des Spalts 22 erfolgt am Nutgrund 10 und der der Niederdruckseite N zugewandten Begrenzungswandung durch den O-Ring 20, außerdem an der niederdruckseitigen Begrenzungswandung durch die niederdruckseitige Stirnseite des Axialstegs 11 und auf der abzudichtenden Fläche 9 des ersten Maschinenelements 1 durch die Dichtfläche 7.

Der Dichtring 5 weist einen T-förmigen Querschnitt auf, wobei der Übergang von den Stirnseiten 12, 13 des Radialstegs 8 zu der Dichtfläche 7 durch einen Radius gebildet ist, der in diesem Ausführungsbeispiel 0,6 mm beträgt und doppelt so groß ist, wie der Radius der Hohlkehlen 14, 15.

Der Dichtring 5 besteht in diesem Ausführungsbeispiel aus PTFE.

Der Axialsteg 11 ist auf der dem O-Ring 20 zugewandten Seite mit einer Stützfläche 21 versehen, wobei das Verhältnis, aus dem Radius des Profils der Stützfläche 21 und dem Radius des Profils des O-Rings in diesem Ausführungsbeispiel 1,5 beträgt.

Zur Funktion wird folgendes ausgeführt:

Ändern sich die Druckverhältnisse an der im Ausführungsbeispiel gezeigten Dichtungsanordnung so, daß der Druck auf der mit N bezeichneten Seite über den Druck steigt, der auf der mit H bezeichneten Seite herrscht, steht der höhere Druck zunächst an der kreisringförmigen Stirnseite 13 des Radialstegs 8 an. Die Stangendichtung bewegt sich innerhalb der Nut 4 insgesamt nach links, wobei die hydraulisch wirkende Kreisringfläche, an der der Druck angreift, stufenweise vergrößert wird. Zunächst entsteht ein sich in radialer Richtung erstreckender Spalt zwischen dem Axialsteg 11 und der Begrenzungswandung der Nut 4 wobei die elastische Vorspannung des O-Rings 20 an dieser Begrenzungswandung allmählich reduziert wird. Bewegt sich die Stangendichtung innerhalb der Nut 4 weiter nach links, wird die Vorspannung des O-Rings 20 an der Begrenzungswand so lange geringer, bis er die Begrenzungswandung nicht mehr berührt und mit seiner axial gegenüberliegenden Seite die dann der Niederdruckseite zugewandte Begrenzungsfläche der Nut 4 unter axialer Vorspannung anliegend berührt. Auch die Stirnseite des Axialstegs 11 die dann der Niederdruckseite zugewandt ist, berührt diese Begrenzungsfläche.

Bei erneuter Umkehr der Druckverhältnisse wiederholt sich der zuvor beschriebene Vorgang.

Durch den T-förmigen Querschnitt des Dichtrings 5 wird eine Spaltextrusion des Dichtrings 5 in den Spalt 22 zuverlässig vermieden.

Durch den gerundeten Übergang von den Stirnseiten 12, 13 des Radialstegs 8 zu der Dichtfläche 7 und durch die gerundet ausgeführten Hohlkehlen 14, 15 weist die erfindungsgemäße Dichtungsanordnung gute Gebrauchseigenschaften während einer sehr langen Gebrauchsdauer auf.

In Figur 2 ist ein zweites Ausführungsbeispiel einer erfindungsgemäßen Dichtungsanordnung gezeigt, das sich vom Ausführungsbeispiel aus Figur 1 nur durch eine abweichend gestaltete Dichtfläche 7 unterscheidet. Die Dichtfläche 7 weist axial mittig eine sich in Richtung des O-Rings 20 erstreckende Vertiefung 23 auf, so daß im Bereich der beiden stirnseitigen Begrenzungen der Dichtfläche 7 jeweils ein umfangsseitig umlaufender Dichtwulst 25, 26 gebildet ist.

Die in axialer Richtung zueinander beabstandeten Dichtwulste 25, 26 begrenzen mit der abzudichtenden Fläche 9 des ersten Maschinenelements 1 einen Hohlraum 27, der in diesem Ausführungsbeispiel mit einem Sperrfett befüllt ist. Die Losbrechkraft und die Reibung werden dadurch besonders günstig beeinflußt.

Im hier gezeigten Ausführungsbeispiel beträgt das Maß der Vertiefung 8 % des Durchmessers des O-Rings 20. Die beiden Dichtwulste 25, 26 gehen gerundet in die Vertiefung 23 über.

## Patentansprüche

1. Dichtungsanordnung zum Abdichten von zwei relativ zueinander hin- und herbeweglichen Maschinenelementen, umfassend eine Stangen- oder Kolbendichtung, die in einer in Richtung des ersten Maschinenelements offenen Nut des zweiten Maschinenelements angeordnet ist und aus einem Dichtring und einem Vorspannring aus elastomerem Werkstoff besteht, wobei der Dichtring einen im wesentlichen T-förmigen Querschnitt aufweist und mit der Dichtfläche seines Radialstegs die abzudichtende Fläche des ersten Maschinenelements dichtend berührt, wobei der Vorspannring unter elastischer Vorspannung zwischen dem Nutgrund der Nut und dem Axialstegs des Dichtrings angeordnet ist, **dadurch gekennzeichnet**, daß der Übergang von den Stirnseiten (12, 13) des Radialstegs (8) zu der Dichtfläche (7) gerundet ausgebildet ist.

2. Dichtungsanordnung nach Anspruch 1, dadurch gekennzeichnet, daß der Radius zwischen den Stirnseiten (12, 13) und der Dichtfläche (7) 10 % der Gesamtbreite (16) des Dichtrings (5), zumindest jedoch 0,2 mm beträgt.

3. Dichtungsanordnung nach einem der Ansprüche 1 oder 2, dadurch gekennzeichnet, daß der Übergang von den Stirnseiten (12, 13) des Radialstegs (8) zum Axialsteg (11) hohlkehlenförmig ausgebildet ist.

4. Dichtungsanordnung nach Anspruch 3, dadurch gekennzeichnet, daß der Radius der Hohlkehlen (14, 15) der Breite (24) der Hohlkehlen (14, 15) entspricht und zumindest 0,1 mm beträgt.

5. Dichtungsanordnung nach einem der Ansprüche 1 bis 4, dadurch gekennzeichnet, daß das Verhältnis aus der Gesamtbreite (16) des Dichtrings (5) und der Breite (17) der Dichtfläche (7) in gleicher Richtung 1,4 bis 1,6 beträgt.

6. Dichtungsanordnung nach einem der Ansprüche 1 bis 5, dadurch gekennzeichnet, daß das Verhältnis aus der Gesamtbreite (16) und der Breite (24) der Hohlkehlen (14, 15) zwischen 16 und 24 beträgt.

7. Dichtungsanordnung nach einem der Ansprüche 1 bis 6, dadurch gekennzeichnet, daß das Verhältnis aus der Gesamthöhe (18) des Dichtrings (7) und der Höhe (19) des Radialstegs (8) 1,25 bis 1,75 beträgt.

8. Dichtungsanordnung nach einem der Ansprüche 1 bis 7, dadurch gekennzeichnet, daß der Vorspannring (6) als O-Ring (20) ausgebildet ist.

9. Dichtungsanordnung nach einem der Ansprüche 1 bis 8, dadurch gekennzeichnet, daß das Profil der dem Vorspannring (6) zugewandten Stützfläche (21) des Axialstegs (11) einen Wölbungsradius hat, der größer ist als der Wölbungsradius des O-Rings (20).

10. Dichtungsanordnung nach Anspruch 9, dadurch gekennzeichnet, daß die radiale Tiefe des Wölbungsradius der Stützfläche (21) zwischen 8 und 12 % der radialen Stärke des Vorspannrings (6) beträgt.

11. Dichtungsanordnung nach einem der Ansprüche 9 oder 10, dadurch gekennzeichnet, daß das Verhältnis aus dem Radius des Profils der Stützfläche (21) und dem Radius des Profils des O-Rings (20) 1,5 bis 2,5 beträgt.

12. Dichtungsanordnung nach einem der Ansprüche 1 bis 11, dadurch gekennzeichnet, daß die Dichtfläche (7) eine in Richtung des Vorspannrings (6) gerichtete Vertiefung (23) aufweist und daß die radiale Tiefe der Vertiefung (23) 6 bis 10 % des Durchmessers des O-Rings (20) aufweist.

13. Dichtungsanordnung nach Anspruch 12, dadurch gekennzeichnet, daß die Vertiefung (23) in axialer Richtung beiderseits durch Dichtwulste (25, 26) begrenzt ist und daß der Übergang zwischen den Dichtwulsten (25, 26) und der Vertiefung (23) im wesentlichen sinusförmig ausgebildet ist.

14. Dichtungsanordnung nach einem der Ansprüche 1 bis 13, dadurch gekennzeichnet, daß der Dichtring (5) aus Polytetraflourethylen (PTFE) besteht.

15. Dichtungsanordnung nach einem der Ansprüche 1 bis 13, dadurch gekennzeichnet, daß der Dichtring (5) aus Polyurethan (PUR) besteht.
